# EUROPÄISCHE PATENTANMELDUNG

(11) **EP 1 316 867 A2**
(43) Veröffentlichungstag der Anmeldung: **04.06.2003**
(21) Anmeldenummer: 02025121.1
(22) Anmeldetag: 08.11.2002
(51) Int. Cl.: G05B 19/418

(54) **Verfahren und Vorrichtung zum Ermitteln und Überwachen von Resourcen in einem Herstellungsprozess**

(30) Priorität: 16.11.2001 DE 10156071
(71) Anmelder: Volkswagen AG, 38436 Wolfsburg (DE)
(72) Erfinder: Achtermann, Gustav, 38442 Wolfsburg (DE); Richartz, Georg, 38442 Wolfsburg (DE); Ritter, Albert, 38158 Gifhorn (DE); Denecke, Michael, 38176 Wendeburg (DE)
(74) Vertreter: Rabe, Andreas

(57) **Zusammenfassung**

Die vorliegende Erfindung betrifft ein Verfahren und eine Vorrichtung zum Ermitteln und/oder Überwachen von Ressourcen in einem Herstellungsprozess. Bei dem Herstellungsprozess liefert zumindest ein Lieferant Teile an zumindest einen Systemanbieter. Der Systemanbieter stellt ein System her, das diese Teile umfasst. Zumindest eine Systemanbietereinrichtung (2) und zumindest eine Lieferanteneinrichtung (3) sind über Kommunikationsverbindungen (4) mit einer Zentraleinrichtung (1) verbunden. Das erfindungsgemäße Verfahren ist dadurch gekennzeichnet, dass ein Eigenschaftsbedarf des Systems als Primärbedarf ermittelt wird und die Systemanbietereinrichtung den Eigenschaftsbedarf an die Zentraleinrichtung elektronisch übermittelt. Des Weiteren übermittelt die Lieferanteneinrichtung (3) die Kapazität für zumindest eine Kapazitätsfamilie (KF) an die Zentraleinrichtung (1) elektronisch, wobei eine Kapazitätsfamilie eine Menge von Teilen umfasst, die auf einer Kapazitätseinheit des Lieferanten fertigbar ist. Ferner werden den Eigenschaften Teilegruppen automatisch zugeordnet, wobei eine Teilegruppe die Menge von zur Erzeugung der Eigenschaft erforderlichen Teilen ist, die auf einer Kapazitätsfamilie fertigbar sind. Aus dem Eigenschaftsbedarf wird ein Teilegruppenbedarf als Sekundärbedarf ermittelt. Schließlich wird für die Teilegruppen automatisch geprüft, ob der Teilegruppenbedarf größer als die Kapazität der Kapazitätsfamilie ist, die der jeweiligen Teilegruppe zugeordnet ist, und das Ergebnis dieser Prüfung wird der Systemanbietereinrichtung und/oder der Lieferanteneinrichtung verfügbar gemacht.

## Beschreibung

Die vorliegende Erfindung betrifft ein Verfahren und eine Vorrichtung zum Ermitteln und/oder Überwachen von Ressourcen in einem Herstellungsprozess. Bei dem Herstellungsprozess liefert zumindest ein Lieferant Teile an zumindest einen Systemanbieter. Der Systemanbieter stellt ein System her, das diese Teile umfasst. Das System kann insbesondere über so genannte Eigenschaften beschrieben werden. Zumindest eine Systemanbietereinrichtung und zumindest eine Lieferanteneinrichtung sind über Kommunikationsverbindungen mit einer Zentraleinrichtung verbunden. Ferner betrifft die Erfindung ein Computersystem, ein Computerprogramm und ein Computerprogrammprodukt zum Durchführen bzw. Ausführen des genannten Verfahrens.

Derartige Verfahren bzw. Systeme werden auch Kapazitätsmanagementverfahren bzw. -systeme genannt. Sie finden insbesondere dann Anwendung, wenn sehr komplexe Systeme, wie z.B. Kraftfahrzeuge, hergestellt werden. Kraftfahrzeuge setzen sich aus einer Vielzahl von Einzelteilen zusammen, die von dem Fahrzeughersteller zusammengesetzt werden. Einzelteile oder Module bezieht der Kraftfahrzeughersteller von einer Vielzahl von Lieferanten. Die Globalisierung in der Automobilindustrie hat zu sehr komplexen Versorgungsnetzwerken geführt, die organisatorisch gesteuert werden müssen. Dies betrifft sowohl die Bereiche Vertrieb, Produktentstehung und Produktion als auch die Beschaffung. Dabei herrscht im Automobilgeschäft ein immer stärkerer globaler Wettbewerb. Als Folge daraus entsteht ein immer breiteres Produktangebot mit immer mehr Fahrzeugneueinsätzen und verkürzten Produktzyklen.

Die angebotenen Produkte, d.h. die Kraftfahrzeuge, müssen den Kunden in Design, Qualität, Funktionalität sowie auch durch Preis und Ausstattung überzeugen. Der Einsatz von Gleichteilen aus einem Konzernbaukasten für die weltweite Fertigung des Kraftfahrzeugs sowie der Einzelteile und Module hierfür führt in Verbindung mit der Strategie, sich je Teil oder Modul weltweit auf ein, zwei oder mehrere Lieferanten zu konzentrieren, zu einem weltumspannenden Versorgungsnetzwerk. Dabei betreibt der Kraftfahrzeughersteller häufig eine Vielzahl von weltweit verteilten Herstellungsstätten für Kraftfahrzeuge. Außerdem hat sich die Belieferungsstruktur auf Grund der Globalisierung der Fahrzeughersteller und Zulieferer geändert. Dies hat zu einem komplexen Netzwerk zwischen dem Fahrzeughersteller bzw. den einzelnen Herstellungswerken des Fahrzeugherstellers und den Lieferanten geführt, deren Steuerung und Beherrschung eine zentrale Herausforderung für die Logistik darstellt.

Die bisherige Situation zeichnet sich dadurch aus, dass wöchentlich jedes Werk des Fahrzeugherstellers für sich einen Lieferabruf für die benötigten Teile auf Teileebene dem Lieferanten zur Verfügung stellt. Eine Überschreitung der Kapazitätsgrenzen des Lieferanten wird a priori so nicht erkannt. Bei auftretenden Versorgungsengpässen melden sich die Lieferanten meist kurzfristig, so dass zur Lösung des Versorgungsproblems nur ein sehr eingeschränkter Handlungsspielraum für beide Partner vorhanden ist. Beim Fahrzeughersteller sind programmplanerisch verwertbarer Kapazitätsinformationen über das Versorgungsnetz der Montagewerke für die Kraftfahrzeuge nicht in ausreichender Form und Aktualität vorhanden. Des Weiteren ist der Bedarfshorizont des Lieferabrufs von normalerweise sechs Monaten für wesentliche Investitionsentscheidungen insbesondere auf Seiten der Lieferanten, sowie die Verfolgung der Bedarfsentwicklung für den Lieferanten nicht ausreichend. Falls ein Lieferant für mehrere Fahrzeugmarken bzw. in mehrere Regionen an mehrere Werke des Fahrzeugherstellers liefert, gibt es zudem keinen zentralen Ansprechpartner bzw. keine zentrale Kommunikationseinheit in der Logistik beim Fahrzeughersteller, über die eine werkübergreifende Koordination und Abstimmung der Lieferabrufe mit den gegebenen Kapazitäten zur Verfügung steht. Die Anzahl der Lieferbeziehungen eines Zulieferers zu verschiedenen Werken des Fahrzeugherstellers nimmt zugleich auf Grund der Strategie, Gleichteile aus einem Konzernbaukasten zu verwenden, zu. Diese Situation führt zu erheblichen Nachteilen bei der logistischen Umsetzung der Gleichteilestrategie eines Fahrzeugherstellers. Des Weiteren führen die kurzfristigen Lösungen eines Versorgungsproblems zu sehr viel höheren Kosten bei der Herstellung des Fahrzeugs.

In der DE 199 30 446 C1 wird ein Diagnoseverfahren zur Überwachung der verfügbaren Ressourcen in einem Herstellungsprozess mit Liefergliedern beschrieben. Die Lieferglieder liefern Komponenten an einen Systemanbieter, der diese Komponenten zu einem System zusammenfügt. Die Lieferglieder sind relativ zu einander in einer vernetzten Lieferkette angesiedelt, so dass einzelne Lieferglieder von anderen Liefergliedern beliefert werden. Jedes Lieferglied verfügt über Lagerbestände, für eingehende Produkte (Eingangspuffer) und Lagerbestände für ausgehende Produkte (Ausgangspuffer). Ferner verfügt jedes Lieferglied über eine Prozessstufe. Bei den Diagnoseverfahren wird zunächst für jedes Lieferglied eine Kennzahl, basierend auf der Auslegung der Lagerbestände und der Prozessstufe, ermittelt. Danach werden von dem Systemanbieter zeitlich fortlaufend jedem Lieferglied Informationen über die prognostizierten Bedarfe des Systemanbieters in ihrer zeitlichen Abfolge zur Verfügung gestellt. Von jedem Lieferglied werden zeitlich fortlaufend Informationen über den momentanen Bestand seiner Lager geliefert. Schließlich wird unter Zuhilfenahme der Kennzahlen der Lieferglieder zeitlich fortlaufend ermittelt, ob deren momentane Lagerbestände den prognostizierten Bedarfen des Systemanbieters genügen, und die Ergebnisse dieser Bewertung zeitlich fortlaufend den Liefergliedern zur Verfügung gestellt.

Nachteilhaft an diesem Diagnoseverfahren ist, dass es nur für den Zeitraum einsetzbar ist, in dem der Systemanbieter Kenntnis über den Bedarf an Teilen hat, die von einem Lieferglied geliefert werden. Dieser Zeitraum ist normalerweise ca. sechs Monate. Da dieses Diagnoseverfahren nur diesen kurzen Zeitraum berücksichtigt, kann auf die Bestände der Lieferglieder abgestellt werden. Auf Grund der hohen Kosten für die Lagerhaltung sind die Bestände von Lieferanten jedoch meist sehr gering. Daher ist ein auf Bestände abstellendes Diagnoseverfahren nicht geeignet, die Ressourcen für einen längeren Zeitraum zu überwachen.

Es ist die Aufgabe der vorliegenden Erfindung ein Verfahren und eine Vorrichtung der Eingangs genannten Art bereit zu stellen, mit dem die Ressourcen in einem Herstellungsprozess für einen möglichst langen Zeitraum ermittelt oder überwacht werden können. Ferner soll ein Computersystem, ein Computerprogramm und ein Computerprogrammprodukt zur Durchführung bzw. Ausführung des Verfahrens bereitgestellt werden.

Diese Aufgabe wird erfindungsgemäß durch ein Verfahren mit den Merkmalen des Anspruchs 1 und einer Vorrichtung mit den Merkmalen des Anspruchs 9 gelöst. Vorteilhafte Aus- und Weiterbildungen ergeben sich aus den Unteransprüchen.

Das erfindungsgemäße Verfahren ist dadurch gekennzeichnet, dass ein Eigenschaftsbedarf des Systems als Primärbedarf ermittelt wird und die Systemanbietereinrichtung den Eigenschaftsbedarf an die Zentraleinrichtung elektronisch übermittelt, dass die Lieferanteneinrichtung die Kapazität für zumindest eine Kapazitätsfamilie an die Zentraleinrichtung elektronisch übermittelt, wobei eine Kapazitätsfamilie die Menge von Teilen ist, die auf einer Kapazitätseinheit des Lieferanten fertigbar ist, dass den Eigenschaften automatisch Teilegruppen zugeordnet werden, wobei eine Teilegruppe die Menge von zur Erzeugung der Eigenschaft erforderlichen Teilen ist, die auf einer Kapazitätsfamilie fertigbar sind, dass aus dem Eigenschaftsbedarf ein Teilegruppenbedarf als Sekundärbedarf ermittelt wird und dass für die Teilegruppen automatisch geprüft wird, ob der Teilegruppenbedarf größer als die Kapazität der Kapazitätsfamilie ist, die der jeweiligen Teilegruppe zugeordnet ist und das Ergebnis dieser Prüfung der Systemanbietereinrichtung und/oder der Lieferanteneinrichtung verfügbar gemacht wird.

Die Beschreibung eines Systems kann auf verschiedene Arten erfolgen. Einerseits kann das System aus der Sicht des Kunden beschrieben werden. Diese Beschreibung erfolgt auf der Primärebene. Als Bedarf wird bei dieser Beschreibung angegeben, wie viele Systeme herzustellen sind und welche Eigenschaften diese Systeme haben. Es kann z. B. angegeben werden, dass in 2 Jahren 1 Million Fahrzeuge pro Jahr abgesetzt werden. Die Eigenschaften sind in diesem Fall z. B. Ausstattungsmerkmale des Fahrzeugs. Diese relativ undetaillierte Beschreibung ist für die mittel- und langfristige Planung geeignet, da das System nur sehr grob charakterisiert wird. Andererseits kann das System aus der Sicht des Systemanbieters, wie z. B. einem Fahrzeughersteller, beschrieben werden. Die Beschreibung des Systems beim Systemanbieter erfolgt über verschiedene Detaillierungsgrade. Die genaueste Beschreibung des Systems erfolgt auf der Teileebene, bei der das System exakt anhand der Teilenummern charakterisiert wird. Als Bedarf werden auf dieser Ebene den Lieferanten Stücklisten für die Teile zur Verfügung gestellt, die der jeweilige Lieferant fertigt. Bei gröberen Beschreibungen des Systems sind die detaillierten Stücklisten nur mit Zusatzinformation erzeugbar. Schließlich kann das System aus der Sicht der Lieferanten beschrieben werden. Die Lieferanten stellen bestimmte Teile des Systems her. Für diese Teile können sie Kapazitäten angeben.

Der vorliegenden Erfindung liegt die Erkenntnis zugrunde, dass bei der mittelfristigen Bedarfsplanung nur Informationen über den Eigenschaftsbedarf vorliegen und es nicht möglich ist, bei der Bedarfsermittlung aus dem Eigenschaftsbedarf einen Bedarf auf Teileebene zu erzeugen. Erfindungsgemäß werden daher für die Beschreibung des Systems so genannte Teilegruppen eingeführt. Eine Teilegruppe im Sinne der vorliegenden Erfindung ist die Menge von Teilen, die zur Erzeugung einer Eigenschaft oder mehrerer Eigenschaften erforderlich sind und die auf einer Kapazitätsfamilie fertigbar sind. Dabei wird unter einer Kapazitätsfamilie im Sinne der Erfindung die Menge von Teilen verstanden, die auf Kapazitätseinheit des Lieferanten fertigbar sind. Auf diese Weise ist es möglich, aus dem Eigenschaftsbedarf einen Teilegruppenbedarf als Sekundärbedarf zu ermitteln, da die Beschreibung über Teilegruppen unspezifischer als die Beschreibung auf Teileebene ist. Gleichzeitig werden bei der Beschreibung über Teilegruppen die Kapazitätsfamilien der Lieferanten berücksichtigt, so dass auf einfache Weise ein Bedarfs-Kapazltäts-Vergleich durchgeführt werden kann.

Des Weiteren liegt der vorliegenden Erfindung die Erkenntnis zu Grunde, dass Informationen über den Bedarf auf verschiedenen Detaillierungsebenen zu verschiedenen Zeitpunkten zur Verfügung stehen. Zu einem sehr frühen Zeitpunkt kann abgeschätzt werden, wie viele Systeme mit welchen Eigenschaften, wie z.B. Fahrzeuge mit bestimmten Ausstattungsmerkmalen, in den nächsten Jahren benötigt werden. Der Eigenschaftsbedarf kann demnach zu einem sehr frühen Zeitpunkt ermittelt werden. Im Gegensatz dazu kann jedoch auf Teileebene ein Bedarf zu diesem frühen Zeitpunkt noch nicht angegeben werden, da erstens nicht bekannt ist, wie sich bestimmte Merkmale des Systems auf Teileebene in diesem Zeitraum verändern, und zweitens, ob nicht neue, bislang noch nicht entwickelte Teile, in das System aufgenommen werden bzw. vorhandene Teile nicht mehr verwendet werden. Die Eigenschaften des Systems werden sich jedoch mit sehr großer Wahrscheinlichkeit über längere Zeiträume nicht verändern, so dass hierfür beim Systemanbieter eine Primär-Bedarfsermittlung möglich ist.

Auf der Seite der Lieferanten liegt der Erfindung die Erkenntnis zu Grunde, dass bestimmte Teile auf einer Kapazitätseinheit gefertigt werden können, wobei es für die Kapazität dieser Kapazitätseinheit unerheblich ist, welches dieser Teile gefertigt wird. Die Menge dieser Teile wird zu einer Kapazitätsfamilie zusammengefasst. Hierdurch ist es dem Lieferanten möglich für einen sehr langen Zeitraum anzugeben, wie groß die Kapazität dieser Kapazitätsfamilie ist. Hat der Lieferant z.B. eine Blechbiegemaschine, weiß er für einen sehr langen Zeitraum wie viele Gehäuseteile er mit dieser Maschine fertigen kann. Informationen darüber, welche Gehäuseteile im Einzelnen gefertigt werden sollen, benötigt er nur sehr kurz vor der Fertigung, da dies nur die Einstellungen der Maschine betrifft.

Mit dem erfindungsgemäßen Verfahren ist es möglich, in einem komplexen Lieferantennetzwerk eine Transparenz über die jeweilige Versorgungssituation zu erhalten. Hierzu werden systematisch Kapazitätsinformationen anhand von Kapazitätsfamilien von den Lieferanten erfasst. Diese Kapazitätsinformationen dienen insbesondere als Schwellwert für einen kollaborativen Prozess zwischen Systemanbieter und Lieferant, um mögliche Versorgungsengpässe im Voraus zu erkennen und entsprechende entgegensteuernde Maßnahmen in Verabredung zwischen Lieferant sowie Logistik und Beschaffung des Systemanbieters zu vereinbaren und durchzuführen.

Die Vorteile des erfindungsgemäßen Verfahrens liegen sowohl auf der Seite der Lieferanten als auch auf der Seite des Systemanbieters, wie z.B. des Fahrzeugherstellers. Da die Bedarfsinformation über den bisher verfügbaren Zeithorizont von ca. sechs Monaten hinaus auf Eigenschaftsebene angegeben wird, erhalten sowohl der Lieferant als auch der Systemanbieter eine mittel- und langfristige Sicht auf die Bedarfsentwicklung. Zugleich wird ein Abgleich der bestehenden Kapazitäten mit den aktuellen Bedarfen, beispielsweise über das Internet und/oder ein Intranet, ermöglicht. Der Lieferant ist somit in der Lage seine eigenen Kapazitäten gezielter steuern zu können, der Systemanbieter kann die so erhaltene Kapazitätsinformation in seinem Planungsprozess a priori berücksichtigen. Damit ergeben sich sowohl im Bereich der vermiedenen Unruhekosten durch kurzfristig ergriffene Maßnahmen im Versorgungsnetz, wie z.B. Flugkosten, als auch im Bereich der Prozesskosten durch eine höhere Reaktionsgeschwindigkeit bei niedrigeren Personalkosten, aber zugleich erhöhter Versorgungssicherheit, Kosteneinsparungen.

Das erfindungsgemäße Verfahren gewährleistet eine Versorgungssicherheit für das herzustellende System, es vermeidet Engpasssteuerungen und Mangelverwaltung und es werden Sonderkosten im Bereich Banking, Luftfracht, sonstige Fahrtkosten, externer Zugkauf, Nach-/Umrüstkosten, Verschrottungskosten etc. vermieden. Ferner können Bedarfs- und Kapazitätsszenarien analysiert und gegensteuernde Maßnahmen abgestimmt werden.

Gemäß einer bevorzugten Weiterbildung des erfindungsgemäßen Verfahrens wird beim Zuordnen der Eigenschaften zu den Teilegruppen auf eine Datenbank zugegriffen, in der die Teile des Systems den Kapazitätsfamilien der Lieferanten zugeordnet sind. Diese Datenbank ist ein so genanntes Stammdatensystem. Durch den Zugriff auf diese Datenbank ist es auf sehr einfache Weise möglich, Eigenschaften in Teilegruppen zu transformieren und hierdurch aus dem Eigenschaftsbedarf einen Teilegruppenbedarf zu erzeugen.

Gemäß einer bevorzugten Weiterbildung des erfindungsgemäßen Verfahrens umfasst die von der Lieferanteneinrichtung übermittelte Kapazität folgende Daten: eine verfügbare Kapazität, eine maximal bereitstellbare Kapazität und/oder eine minimale Kapazität. Gemäß dieser Weiterbildung wird automatisch geprüft, ob der Teilegruppenbedarf die verfügbare Kapazität und/oder die maximale Kapazität überschreitet und/oder die minimale Kapazität unterschreitet. Das Ergebnis dieser Prüfung wird der Systemanbietereinrichtung und/oder der Lieferanteneinrichtung verfügbar gemacht. Bei dieser Weiterbildung werden inhaltlich und quantitativ Kapazitätsgrößen bei den Lieferanten erfasst, um darauf aufbauend einen sinnvollen Abgleich der Bedarfe mit den Kapazitäten zu ermöglichen. Unter der verfügbaren Kapazität wird die dem Systemanbieter tatsächlich zur Verfügung stehende Kapazität des Lieferanten verstanden. Unter der maximalen Kapazität wird die Kapazität verstanden, die der Lieferant unter Ausnutzung aller Maßnahmen dem Systemanbieter zur Verfügung stellen kann. Liefert der Lieferant beispielsweise an mehrere Systemanbieter, kann er die Kapazitäten, welche er den jeweiligen Systemanbietern zur Verfügung stellt, verändern und so die Kapazität für einen bestimmten Systemanbieter erhöhen. Des Weiteren kann die Arbeitsgeschwindigkeit von Fertigungseinheiten häufig erhöht werden. Die Umstellung von der verfügbaren Kapazität auf eine maximale Kapazität ist in der Regel mit einer Vorlaufzeit verbunden. Die minimale Kapazität ist die Kapazität, die der Lieferant minimal dem Systemanbieter bereitstellen kann. Unterschreitet beispielsweise der Bedarf die minimale Kapazität für ein bestimmtes Zeitintervall von z. B. 4 Wochen, kann ggf. die verfügbare Kapazität vom Lieferanten verändert werden. Ein erneutes Anheben der verfügbaren Kapazität ist unter Umständen jedoch mit einer Vorlaufzeit verbunden.

Die drei Kapazitätsarten werden von dem Lieferanten beispielsweise in wochenweisen Mengen als Bewegungsgröße an die Zentraleinrichtung übertragen. Sie bilden die Grundlage für den im Folgenden durchgeführten Bedarfs- und Kapazitätsabgleich und den darauf aufbauenden Prozessen. Grundprinzip dieser Prozesse ist, dass der Lieferant über die Zentraleinrichtung und den durchgeführten Bedarfs- und Kapazitätsabgleich ein Versorgungsproblem in der Zukunft erkennt. Der Lieferant kann daraufhin notwendige Maßnahmen zur Vermeidung des Problems im Vorfeld einleiten. Dieses Problem kann nun einerseits über die Systemanbietereinrichtung oder die Lieferanteneinrichtung gelöst werden, wobei diese Einrichtungen über die Zentraleinrichtung miteinander gekoppelt sind.

Gemäß einer bevorzugten Weiterbildung des erfindungsgemäßen Verfahrens übermittelt die Systemanbietereinrichtung für ein den Eigenschaftsbedarf ab einem ersten Zeitpunkt und den Teilebedarf für dieses System ab einem zweiten, späteren Zeitpunkt an die Zentraleinrichtung. Die Lieferanteneinrichtung übermittelt die Kapazität für die Teile ab dem zweiten Zeitpunkt an die Zentraleinrichtung und daraufhin wird automatisch geprüft, ob der Teilebedarf größer als die Teilekapazität ist und das Ergebnis dieser Prüfung der Systemanbietereinrichtung und/oder der Lieferanteneinrichtung verfügbar gemacht.

Diese Ausgestaltung verbindet ein Kapazitätsmanagementverfahren auf Teileebene mit dem Kapazitätsmanagementverfahren auf Teilegruppen- bzw. Eigenschaftsebene. Zunächst wird der Eigenschaftsbedarf und daraus der Teilegruppenbedarf ermittelt und danach übertragen. Ab diesem Zeitpunkt ist der Teilebedarf, d.h. die Stücklisten mit den einzelnen Teilnummern, beim Systemanbieter noch nicht genau bekannt. Sobald der Bedarf auf Teileebene feststeht, wird der Teilebedarf, d.h. auf Basis genau spezifizierter Stücklisten, an die Zentraleinrichtung übermittelt. Ferner übermittelt die Lieferanteneinrichtung die Kapazität für diese Teile, so dass zu dem zweiten, späteren Zeitpunkt auch ein Bedarfs-/Kapazitätsabgleich auf Teileebene durchgeführt werden kann.

Gemäß einer weiteren vorteilhaften Ausgestaltung betrifft der Eigenschaftsbedarf einen ersten Zeitraum (Mittelfristbereich) und der Teilebedarf einen zweiten Zeitraum (Kurzfristbereich), wobei der erste Zeitraum Zeitabschnitte umfasst, die zeitlich vor dem zweiten Zeitraum liegen. Durch diese Ausgestaltung kann vorteilhafterweise eine vollständige Überwachung der Ressourcen auf Eigenschafts- und auf Teileebene erfolgen, sobald die jeweiligen Bedarfe für diese Ebenen zur Verfügung stehen.

Eine Kapazitätsfamilie kann beispielsweise mehrere Fertigungseinheiten eines Lieferanten zur Herstellung eines oder mehrerer Teile umfassen. Beispielsweise können an der Fertigung eines Teils mehrere Maschinen, Fertigungsbänder und dgl. beteiligt sein. Es ist nicht erforderlich, die Kapazitäten für diese einzelnen Fertigungseinheiten zu betrachten, vielmehr reicht es aus, die Fertigungseinheiten unter eine Kapazitätsfamilie zu subsumieren und hierfür eine Kapazität anzugeben.

Bei dem Versorgungsnetzwerk zwischen dem Systemanbieter und der Vielzahl von Lieferanten bilden häufig mehrere Lieferanten eine Lieferkette. Dies bedeutet, dass ein Lieferant Teile an den nächsten Lieferanten liefert, der diese Teile dazu benutzt ein weiteres Produkt zu schaffen, um dieses einem weiteren Lieferanten zur Verfügung zu stellen, bis schließlich ein Modul, das sich aus mehreren Teilen der verschiedenen Lieferanten der Lieferkette zusammensetzt, an den Systemanbieter geliefert wird.

Vorzugsweise wird in einem solchen Fall zwischen dem Systemanbieter und jedem Lieferanten der Lieferkette eine direkte Beziehung hergestellt, so dass die Systemanbietereinrichtung Bedarfsdaten für jeden Lieferanten der Lieferkette an die Zentraleinrichtung übermittelt, und jede Lieferanteneinrichtung Kapazitätsdaten für Kapazitätsfamilien der von dem zugehörigen Lieferanten zu fertigenden Teile an die Zentraleinrichtung übermittelt. Diese Art der Abbildung des Versorgungsnetzwerkes zwischen Lieferanten und Systemanbieter hat den Vorteil, dass ein direkter Kapazitäts-/Bedarfsabgleich zwischen dem Systemanbieter und jedem direkten oder indirekten Lieferanten stattfinden kann. Übersteigt der Bedarf die Kapazität eines bestimmten Lieferanten der Lieferkette, kann der Systemanbieter direkt mit diesem Lieferanten Kontakt aufnehmen. Die Zuverlässigkeit des erfindungsgemäßen Verfahrens wird hierdurch verbessert. Ferner können leichter Lösungsmöglichkeiten bei vorauszusehenden Versorgungsproblemen gefunden werden.

Vorzugsweise bleiben bei dem erfindungsgemäßen Verfahren bei den Kapazitätsdaten Bestände der Lieferanten unberücksichtigt. Derartige Bestände stellen Durchlaufposten dar, die im Mittelfristbereich nicht berücksichtigt werden müssen.

Gemäß einer bevorzugten Weiterbildung des erfindungsgemäßen Verfahrens wird für die Kapazitätsfamilie oder die Kapazitätsfamilien geprüft, ob und um wie viel der Teilegruppenbedarf die Kapazität unterschreitet und das Ergebnis dieser Prüfung wird der Systemanbietereinrichtung und/oder der Lieferanteneinrichtung verfügbar gemacht. Hierdurch können vorteilhafterweise insbesondere die Lieferanten die zukünftige Auslastung ihrer Kapazitäten überprüfen. Außerdem werden die Lieferanten durch diese Weiterbildung des Verfahrens unterstützt, zukünftige Investitionsentscheidungen zu treffen.

Bei der erfindungsgemäßen Vorrichtung zum Ermitteln und/oder Überwachen von Ressourcen in einem Herstellungsprozess liefert zumindest ein Lieferant Teile an zumindest einen Systemanbieter, welcher ein diese Teile umfassendes System herstellt, das über Eigenschaften beschrieben wird. Die Vorrichtung umfasst eine Zentraleinrichtung, die über Kommunikationsverbindungen mit zumindest einer Systemanbietereinrichtung und zumindest einer Lieferanteneinrichtung koppelbar ist. Die Zentraleinrichtung umfasst eine erste Schnittstelle zum elektronischen Empfang des Eigenschaftsbedarfs von der Systemanbietereinrichtung, eine zweite Schnittstelle zum elektronischen Empfang der Kapazität für zumindest eine Kapazitätsfamilie von der oder den Lieferanteneinrichtung(en), wobei eine Kapazitätsfamilie die Menge von Teilen ist, die auf einer Kapazitätseinheit des Lieferanten fertigbar ist, eine Zuordnungseinheit, mittels derer automatisch den Eigenschaften Teilegruppen zugeordnet werden können, wobei eine Teilegruppe die Menge von zur Erzeugung der Eigenschaft erforderlichen Teile ist, die auf einer Kapazitätsfamilie fertigbar sind, und durch die aus dem Eigenschaftsbedarf ein Teilegruppenbedarf ermittelbar ist, und eine Prüfeinheit, die prüft, ob für die Teilegruppen der Teilegruppenbedarf größer als die Kapazität ist, wobei das Ergebnis dieser Prüfung der Systemanbietereinrichtung und/oder der Lieferanteneinrichtung verfügbar gemacht werden kann.

Vorzugsweise ist die Zentraleinrichtung der erfindungsgemäßen Vorrichtung mit einem Speicher verbunden, in dem eine Datenbank gespeichert ist, in der die Teile des Systems den Kapazitätsfamilien der Lieferanten zugeordnet sind. In dieser Datenbank ist somit ein so genanntes Stammdatensystem gespeichert. Durch den Zugriff auf dieses Stammdatensystem kann die erfindungsgemäße Vorrichtung vorteilhafterweise sehr schnell die Zuordnung zwischen Eigenschaften und Teilegruppen herstellen, da eine direkte Beziehung zwischen den Teilegruppen und den Kapazitätsfamilien besteht. Ferner ist durch das Stammdatensystem die Datenpflege sehr einfach.

Über die zweite Schnittstelle können zu der Kapazität ferner folgende Daten von der Lieferanteneinrichtung elektronisch empfangbar sein: die verfügbare Kapazität, die maximal bereitstellbare Kapazität und/oder die minimale Kapazität. In diesem Fall prüft die Prüfeinheit, ob der Bedarf die verfügbare Kapazität und/oder die maximale Kapazität überschreitet und/oder die minimale Kapazität unterschreitet. Das Ergebnis dieser Prüfung wird vorzugsweise von der Prüfeinheit der Systemanbietereinrichtung und/oder der Lieferanteneinrichtung verfügbar gemacht.

Die Zentraleinrichtung kann beispielsweise eine mit dem Internet und/oder einem Intranet verbundene Datenverarbeitungseinrichtung des Systemanbieters sein. Über das Internet und/oder ein Intranet können auch die Lieferanteneinrichtungen mit der Zentraleinrichtung gekoppelt sein. Auf diese Weise sind der Eigenschaftsbedarf sowie die Kapazität über das Internet und/oder ein Intranet elektronisch übermittelbar. Die zweite Schnittstelle kann z. B. eine Tastatur für manuelle Eingaben oder eine Verbindung zu einer weiteren Datenverarbeitungsanlage sein.

Gemäß einer bevorzugten Weiterbildung der erfindungsgemäßen Vorrichtung prüft die Prüfeinheit ferner für die Kapazitätsfamilie(n), ob und wie viel der Teilegruppenbedarf die Kapazität unterschreitet und das Ergebnis dieser Prüfung kann der Systemanbietereinrichtung und/oder der Lieferanteneinrichtung verfügbar gemacht werden.

Schließlich wird gemäß der vorliegenden Erfindung ein Computersystem bereitgestellt, das programmtechnisch zur Durchführung des vorstehend beschriebenen Verfahrens eingerichtet ist. Ferner wird ein Computerprogramm mit Programmcode-Mitteln bereitgestellt, um alle Schritte des vorstehend beschriebenen Verfahrens durchzuführen, wenn das Programm auf einem Computersystem ausgeführt wird. Schließlich stellt die vorliegende Erfindung ein Computerprogrammprodukt mit Programmcode-Mitteln bereit, die auf einem computerlesbarem Datenträger gespeichert sind, um das vorstehend beschriebene Verfahren durchzuführen, wenn das Programmprodukt auf einem Computer ausgeführt wird.

Gemäß der vorliegenden Erfindung sind Logistikfunktionen, basierend auf der Struktur des Systemanbieter- und Lieferantenunternehmens installiert. Hierdurch können in den einzelnen Logistikorganisationen verschiedenen Prozesse und Abläufe implementiert werden, um die Steuerung und Absicherung des Versorgungsnetzes zu bewerkstelligen. Das durch die Erfindung zur Verfügung gestellte Bedarfs-Kapazitäts-Management kann in den Programmplanungsprozess integriert werden, und als Instrument zur Steuerung des Netzwerkes eingesetzt werden. Vor der Verabschiedung des jeweils neuen Produktionsprogramms werden auf Basis der Ergebnisse des Bedarfs-Kapazitäts-Managements in einem bereichsübergreifenden Entscheidungskreis Leitplanken und Orientierungsrahmen für die Produkte (Systeme) zur Konsolidierung aller Produktionsprogramme vorgegeben. Das Produktionsprogramm ist damit ein gemeinsames Commitment zwischen Vertrieb, Produktion und Logistik. Über die Konsolidierung wird die Baubarkeit der gemeinsam verabschiedeten Produktionsprogramme gewährleistet. Auf Grund der Strukturierung in verschiedene Systeme des Systemanbieters und Regionen, die für ihr eigenes Ergebnis verantwortlich sind, das aber gleichzeitig zu einem optimalen Ergebnis des Systemanbieters führen muss, ergibt sich die Notwendigkeit, alle Aktivitäten für die einzelnen Systeme und Werke auf Konzernebene zu vernetzen. Die Erfindung stellt damit ein Mittel zur Steuerung des komplexen Versorgungsnetzes gemeinsam mit den beteiligten in- und externen Partnern bereit. Es wird eine Systemanbieter übergreifende Steuerung der Lieferabrufsituation für Material und Dienstleistungen in einem gemeinsamen Prozess mit den Dispositionen der Montage- und Komponentenwerke bereitgestellt.

Das erfindungsgemäße Verfahren und die Vorrichtung stellen ein allen zugängliches vorteilhafterweise Web-basiertes Softwaretool bereit, das den Anwendern den zeitgleichen jeweils aktualisierten Informationsstand in Bezug auf die Bedarfe und Kapazitäten ermöglicht und damit Transparenz über die Versorgungssituation erzeugt. Hierdurch wird die Zusammenarbeit der jeweiligen teilebezogenen Ansprechpartner bei Lieferern sowie Logistik und Einkauf beim Systemanbieter verbessert. Hierfür kann für den Umfang der dargestellten Teile von vornherein der jeweilige Ansprechpartner auf Lieferantenseite und Systemanbieterseite (Logistik und Beschaffung) als Stammbaum eingepflegt werden, um hierdurch die Effizienz der prozessualen Umsetzung der dargestellten Informationen zu erhöhen und damit die Grundlage für eine höhere Reaktionsfähigkeit in Versorgungsengpasssituationen zu schaffen.

Besondere Bedeutung bei dem erfindungsgemäßen Verfahren und der erfindungsgemäßen Vorrichtung kommt dabei dem Austausch von Bedarfs- und Kapazitätsinformationen zwischen dem Systemanbieter und den Lieferanten zu. Als Quelle für die Bedarfsinformation dient hierfür nicht nur die vom Herstellerwerk des Systemanbieters an die Lieferanten übermittelten Lieferabrufe, sondern auch Bedarfsinformationen über einen erweiterten Bedarfshorizont aus dem Produktionsprogrammplanungsprozess beim Systemanbieter.

Zum einen werden dem Lieferanten neben den ihm üblicherweise parallel über Datenfernübertragung zugehenden Lieferabrufen, die Bedarfe für ausgewählte Teile via Internet zur Verfügung gestellt. Die vorhandene Bedarfsleiste auf Basis des Lieferabrufs umfasst in Wochenrastern, z.B. einen Horizont von mehreren Monaten; sie wird für jede betrachtete Teilenummer dargestellt. Zum anderen werden erfindungsgemäß weitere Bedarfsinformationen aus dem der wöchentlichen Mengenplanung übergeordneten Programmplanungsprozess an den Lieferanten (bzw. an eine Zentraleinrichtung) via Internet übermittelt. Die damit dargestellte Bedarfsinformation bezieht sich im Unterschied zu den Lieferabruf-basierten Bedarfen auf die sog. Eigenschaftsebene. D.h., die Bedarfsmengen werden nicht auf der mit Hilfe von Stücklistenauflösungen ermittelten Ebene der Teile sondern auf der Beschreibungsebene eines Systems, wie z.B. eines Fahrzeugs, durch einzelne Eigenschaften bzw. (Ausstattungs-)Merkmale angegeben. Der Vorteil hierbei ist, dass diese Information intern beim Systemanbieter bereits für einen erheblich längeren Zeithorizont verfügbar ist. Dies ist auch dort vorteilhaft, wo die dokumentierten Stücklisteninformationen in ihrer Qualität zunehmend abnehmen. Die angeschlossenen Lieferanten erhalten diese Information via Internet über einen Horizont von z.B. 24 Monaten.

Um aus den dargestellten Bedarfsmengen auf Eigenschaftsebene die entsprechenden Bedarfe auf Teileebene ableiten zu können, wird der Zusammenhang zwischen gelieferten Teileumfang und Eigenschaften als Verwendungsbeziehung (Stammbaum) eingepflegt. Der Lieferant erhält somit über eine Bedarfsermittlung die aktualisierten Bedarfsmengen für Teilegruppen (Pseudoteile). Die Bedarfsermittlung auf Teileebene ist aber erst ab einem späteren Zeitpunkt möglich, d.h. nachdem die Bedarfsdaten auf Eigenschaftsebene schon übermittelt wurden.

Auf Seiten des Systemanbieters ermitteln Disponenten oder eine automatisierte Dispositionseinrichtung eine Liefervorschau für z.B. fünf Monate auf Teileebene. Diese wird in die Systemanbietereinrichtung eingepflegt und danach an die Zentraleinrichtung elektronisch übermittelt. Außerdem wird eine Programmplanung, z.B. für einen Zeitraum von bis zu 24 Monaten, auf Eigenschaftsebene durchgeführt und die entsprechenden Bedarfsdaten über die Systemanbietereinrichtung an die Zentraleinrichtung übermittelt.

Auf Seiten des Lieferanten ermittelt ein Produktionsplaner oder eine automatisierte Programmplanungseinrichtung Kapazitäten für Kapazitätsfamilien für einen Zeitraum von z.B. bis zu 24 Monaten. Diese Kapazitätsdaten werden über die Lieferanteneinrichtung an die Zentraleinrichtung übertragen. In der Zentraleinrichtung kann dann ein Kapazitäts-Bedarfs-Abgleich für die jeweiligen Zeiträume erfolgen.

Die erfasste Kapazitätsinformation schließt sich direkt an die Betrachtung der Bedarfe an. Im Bedarfshorizont des Lieferabrufs fasst der Lieferant entsprechend seiner vorhandenen Fertigungsstruktur die Teile (beschrieben durch die Teilenummern) zu sog. Kapazitätsfamilien zusammen. Dies kann er in dem Kapazitätsmodell mehrstufig durchführen. Durch das Zuordnen von einzelnen Teilen zu Kapazitätsfamilien wird das Modellieren von Kapazitätsstrukturen ermöglicht, die mehrere Varianten zeitgleich produzieren.

Die Erfindung wird nun anhand von Ausführungsbeispielen mit Bezug zu den Zeichnungen erläutert.
Fig. 1 zeigt schematisch die erfindungsgemäße Vorrichtung zum Ermitteln und/oder Überwachen von Ressourcen in einem Herstellungsprozess,
Fig. 2 zeigt die Zentraleinrichtung 1 der erfindungsgemäßen Vorrichtung,
Fig. 3 zeigt eine Darstellung zur Erläuterung der Verknüpfung des Bedarfs auf Seiten des Systemanbieters und der Kapazitäten auf Seiten der Lieferanten,
Fig. 4 zeigt ein Flussdiagramm zur Erläuterung des erfindungsgemäßen Verfahrens,
Fig. 5 zeigt ein Beispiel eines Bedarfsverlaufs relativ zur minimalen, verfügbaren und maximalen Kapazität eines Lieferanten,
Fig. 6 zeigt schematisch die Zeiträume, in denen der Eigenschaftsbedarf bzw. der Teilebedarf von der Systemanbietereinrichtung an die Zentraleinrichtung übermittelt wird,
Fig. 7 zeigt den Aufbau und die zeitliche Entwicklung eines Bedarfs-Kapazitäts-Baums, und
Fig. 8 zeigt eine Darstellung zur Erläuterung der Kapazitätsfamilien.

Die Erfindung wird anhand eines Ausführungsbeispiels aus der Kraftfahrzeugindustrie erläutert. Die Erfindung ist jedoch anwendbar auf alle Bereiche, in denen ein Systemanbieter ein komplexes System herstellt, das sich aus mehreren Teilen zusammensetzt, welche der Systemanbieter zumindest zum Teil von Lieferanten bezieht. Auch der Begriff "Teile" kann im Sinne der Erfindung weit verstanden werden, da er nicht nur körperliche Teile, aus denen sich das System zusammensetzt umfasst, sondern alles was zum Herstellungsprozess beiträgt und damit auch Dienstleistungen, wie z.B. den Transport von Teilen, oder Behältnisse zum Transport von Teilen. Die Lieferanten bieten diese Waren oder Dienstleistungen dem Systemanbieter an, wobei sie für bestimmte Zeiträume Kapazitäten zur Herstellung oder Bereitstellung der Waren oder zur Erbringung der Dienstleistungen zur Verfügung stehen.

Bei dem Ausführungsbeispiel ist der Systemanbieter ein Fahrzeughersteller. Das System, welches von dem Fahrzeughersteller hergestellt wird, ist ein Kraftfahrzeug. Das Kraftfahrzeug setzt sich aus einer Vielzahl von Einzelteilen zusammen, welche der Fahrzeughersteller zum Teil selbst herstellt, zum Teil jedoch von einer Vielzahl von Lieferanten bezieht. Die Lieferanten bilden zum Teil Lieferketten, bei der ein Lieferant jeweils Teile an den nächsten Lieferanten liefert, bis schließlich der Fahrzeughersteller Teile oder ein Modul vom letzten Lieferanten der Lieferkette erhält. Die Lieferanten liefern beispielsweise Klimageräte, Scheinwerfer, Felgen, Sitze, Navigationssysteme, usw. an den Fahrzeughersteller.

Der Fahrzeughersteller und die Lieferanten besitzen eine Systemanbietereinrichtung 2 und Lieferanteneinrichtungen 3. Dies sind an das Internet angebundene Datenverarbeitungseinrichtungen des Fahrzeugherstellers und der Lieferanten. Auf Seiten des Fahrzeugherstellers sind in der Systemanbietereinrichtung Bedarfsdaten gespeichert. Im Ausführungsbeispiel wird nur eine Systemanbietereinrichtung 2 betrachtet, jedoch kann ein Systemanbieter auch mehrere Systemanbietereinrichtungen 2 besitzen. Beispielsweise kann jedes Montagewerk eines Fahrzeugherstellers eine Systemanbietereinrichtung aufweisen. Die Bedarfsdaten können auch über ein gesondertes Verfahren automatisch von der Systemanbietereinrichtung 2 ermittelt und dann gespeichert werden.

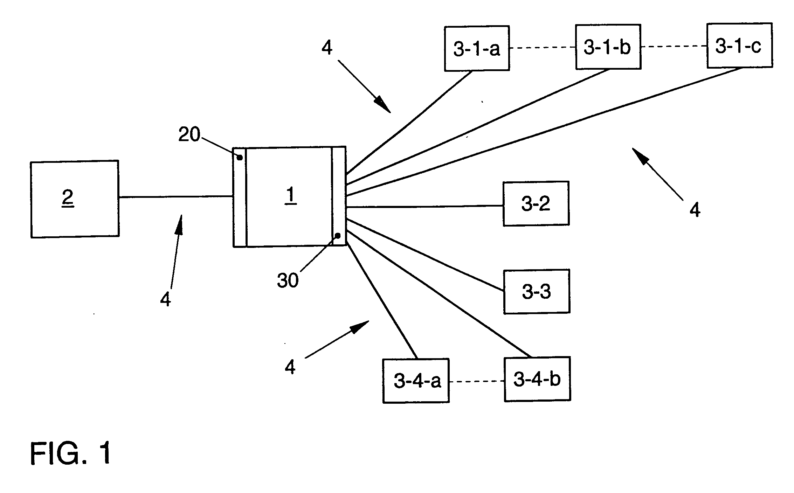

Auf Seiten der Lieferanten sind in den Lieferanteneinrichtungen Kapazitätsdaten gespeichert. Diese Kapazitätsdaten können auch automatisch ermittelt werden. Die Lieferanteneinrichtungen werden allgemein mit dem Bezugszeichen 3 bezeichnet, spezielle Lieferanteneinrichtungen des Lieferantennetzwerkes, wie es z.B. in Fig. 1 gezeigt ist, werden z.B. mit 3-1-b bezeichnet.

Schließlich ist eine Zentraleinrichtung 1 vorgesehen, die mit der Systemanbietereinrichtung 2 und den Lieferanteneinrichtungen 3 über Kommunikationsverbindungen 4 gekoppelt sind. Die Zentraleinrichtung 1 ist z.B. ein Server, der eine Website bereitstellt, auf welche die Systemanbietereinrichtung 2 und die Lieferanteneinrichtungen 3 über das Internet zugreifen können und hierdurch ein Datenaustausch mit der Zentraleinrichtung 1 möglich ist. Hierfür weist die Zentraleinrichtung 1 eine erste Schnittstelle 20 zum elektronischen Empfang von Daten von der Systemanbietereinrichtung 2 sowie eine zweite Schnittstelle 30 zum elektronischen Empfang von Daten von den Lieferanteneinrichtungen 3 auf.

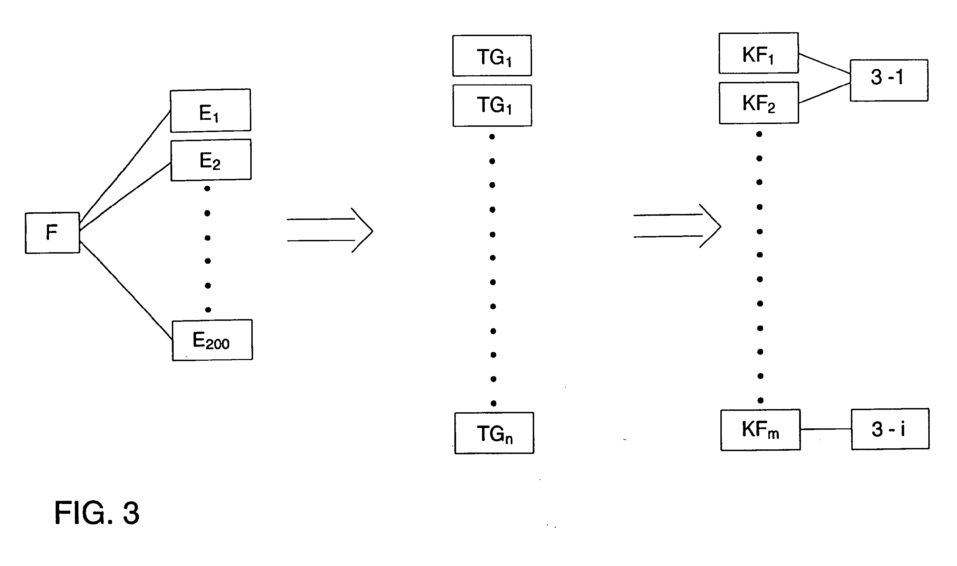

Im Folgenden wird die Beschreibung des Bedarfs auf Seiten des Systemanbieters und die Beschreibung der Kapazitäten auf Seiten der Lieferanten sowie die Verknüpfung dieser beiden Größen anhand von Fig. 3 erläutert:

Der Fahrzeughersteller (Systemanbieter) stellt Fahrzeuge her, welche sich über bestimmte Eigenschaften charakterisieren lassen. In der Automobilindustrie sind Eigenschaften Ausstattungsmerkmale der Fahrzeuge, die aus Sicht des Kunden angegeben werden. Ein Fahrzeug kann beispielsweise die Eigenschaften haben, einen 1,8 I-Motor, ein Klimagerät, einen Gasentladungsscheinwerfer und Aluminiumfelgen aufzuweisen. Der Vorteil der Beschreibung des Fahrzeugs anhand von Eigenschaften ist, dass es sich für einen relativ langen Zeitraum, wie z. B. 24 Monate, abschätzen oder automatisch ermitteln lässt, wie groß der Bedarf an Fahrzeugen mit diesen Eigenschaften ist. Diese Angabe des Bedarfs auf Eigenschaftsebene wird als Primärbedarf bezeichnet.

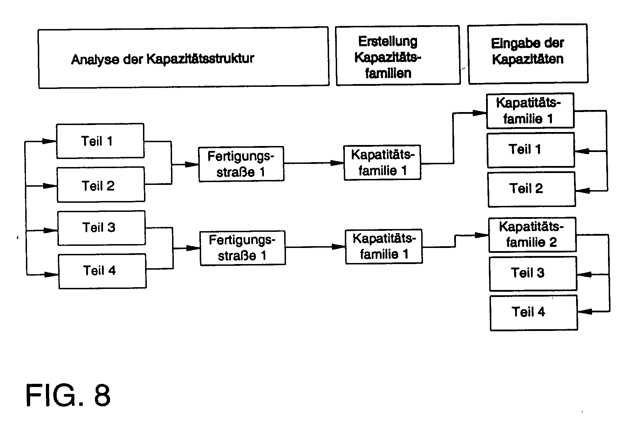

Für die Herstellung eines Fahrzeugs mit bestimmten Eigenschaften sind eine Vielzahl von Einzelteilen erforderlich. Diese Einzelteile werden zumindest z. T. von Lieferanten hergestellt. Die Herstellung erfolgt auf Fertigungseinheiten, welche bestimmte Kapazitäten besitzen. Auf Lieferantenseite werden die Teile zusammengefasst, die auf einer bestimmten Kapazitätseinheit fertigbar sind (vgl. Fig. 8). Die Menge dieser Teile wird als Kapazitätsfamilie bezeichnet. Charakteristisch für eine Kapazitätsfamilie ist, dass die Kapazität für die Herstellung von Teilen, welche auf den Einheiten einer Kapazitätsfamilie herstellbar sind, für einen langen Zeitraum im voraus bekannt ist. Umfasst die Kapazitätsfamilien beispielsweise eine Maschine zur Herstellung von Blenden, kann der Blendenlieferant für einen sehr langen Zeitraum im voraus angeben, wie viele Blenden pro Zeiteinheit er fertigen kann. Welche Blendenvariante im Einzelnen herzustellen ist, hängt nämlich nur von den Einstellungen seiner Maschine ab, so dass der Blendenlieferant die genaue Teilenummer der Blende, die hergestellt werden soll, erst sehr kurz vor der Fertigung benötigt. Eine Kapazitätsfamilie zeichnet sich demnach auch dadurch aus, dass eine kurzfristige Änderung des Bedarfs der Teile, welche von der Kapazitätsfamilie umfasst sind, auf Teileebene bzw. Teilenummernebene die Kapazität der Kapazitätsfamilie nicht ändert.

Für das Verfahren zum Ermitteln und/oder Überwachen von Ressourcen in dem Herstellungsprozess des Fahrzeugs ist es nun erforderlich, eine Verknüpfung zwischen dem Eigenschaftsbedarf einerseits und den Kapazitätsfamilien andererseits herzustellen. Hierfür wird gemäß der Erfindung das so genannte Teilegruppen-Konzept eingeführt. Den Eigenschaften werden dabei automatisch Teilegruppen zugeordnet, wobei eine Teilegruppe die Menge von zur Erzeugung einer Eigenschaft erforderlichen Teilen ist, die auf einer Kapazitätsfamilie fertigbar sind. Dabei ist es möglich, dass verschiedene Teilegruppen auf Kapazitätseinheiten hergestellt werden können, welche in die gleiche Kapazitätsfamilie fallen. Beispielsweise können die Teilegruppen "Blenden für Klimageräte" und "Blenden für Lüftungseinheiten" der gleichen Kapazitätsfamilie zugeordnet sein, da der Blendenlieferant beide Blenden auf derselben Maschine fertigen kann.

Für das Verfahren zum Ermitteln und Überwachen der Ressourcen in dem Herstellungsprozess des Fahrzeugs muss nun noch eine Verbindung zwischen dem Eigenschaftsbedarf als Primärbedarf und dem Teilegruppenbedarf als Sekundärbedarf hergestellt werden. Für die Ermittlung des Teilegruppenbedarfs aus dem Eigenschaftsbedarf ist ein so genanntes Stammdatensystem vorgesehen. Dieses Stammdatensystem besteht aus einer in einem Speicher gespeicherten Datenbank, in der die Teile, aus denen sich das Fahrzeug zusammensetzt, den Kapazitätsfamilien der Lieferanten zugeordnet sind. Auf diese Weise kann aus dem Eigenschaftsbedarf ein Teilegruppenbedarf abgeleitet werden. Dabei ist es nicht erforderlich zu wissen, wie die Eigenschaften letztendlich auf einer Ebene der Teilenummern ausgestaltet werden, da die Teilegruppen nur die Kapazitätsstruktur der Lieferanten abbilden und keine Auflösung bis zu der Ebene der Teilenummern erforderlich machen.

Wie vorstehend erläutert, leiten sich somit die Kapazitätsfamilien aus der Produktionsstruktur des Lieferanten ab und fassen diejenigen Teile oder Teilegruppen zusammen, die gemeinsam gewissen Mengenrestriktionen unterliegen, z. B. die Fertigung unterschiedlicher Teile auf einer Maschine mit einer maximalen Ausbringung. Die Pflege der Kapazitätsfamilien und die Zuordnung der Teile und Teilegruppen bei Veränderungen, die z. B. durch Ablösung einer alten durch eine neue Maschine entstehen können, erfolgt über die Lieferanteneinrichtung 3. Schließlich kann die erzeugte Kapazitätsfamilie einem hierarchischen Bedarfs-Kapazitäts-Baum zugewiesen werden, um weitere Restriktionen abzubilden. Der Kapazitätsfamilie werden nun die betroffenen Teile und/oder Teilegruppen zugeordnet. Anschließend wird die Kapazitätsfamilie bei der Zentraleinrichtung 1 zur Kollaboration angemeldet. Diese Kollaboration wird der Systemanbietereinrichtung 2 zur Verfügung gestellt.

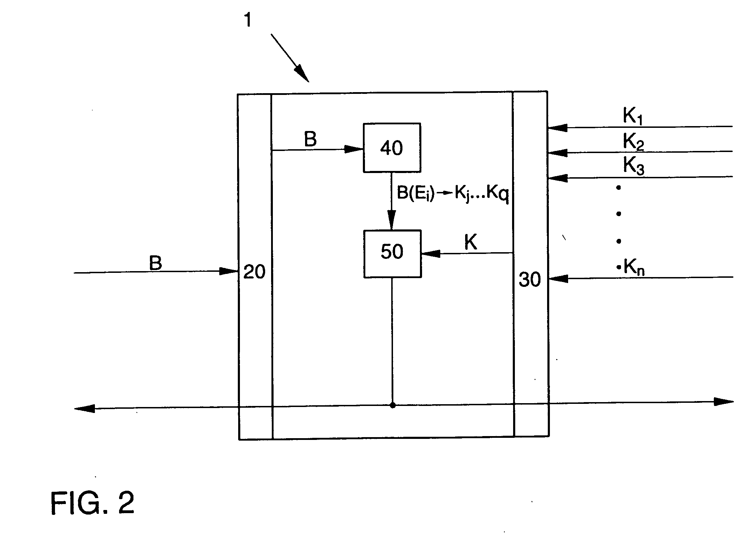

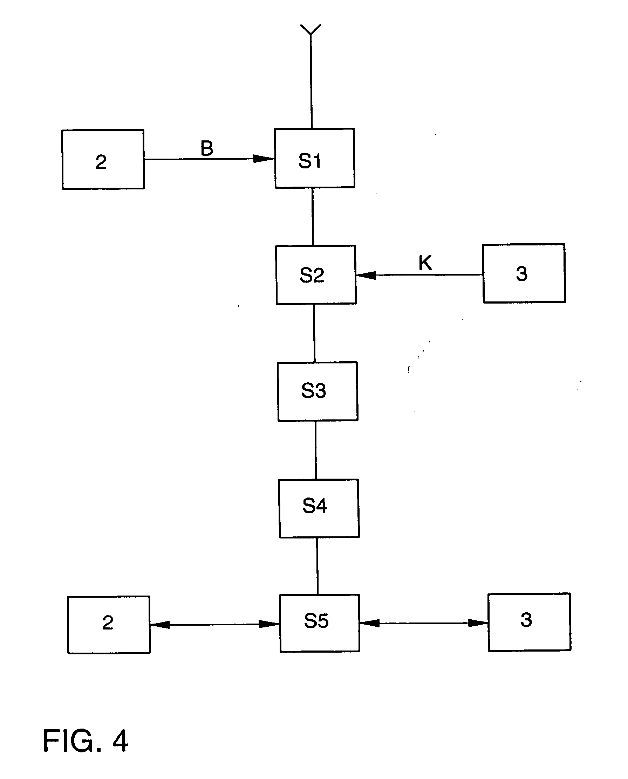

Im Folgenden wird das Ausführungsbeispiel des erfindungsgemäßen Verfahrens und der erfindungsgemäßen Vorrichtung anhand von Fig. 2 und Fig. 4 im Einzelnen beschrieben:

Der Fahrzeughersteller (bzw. seine Systemanbietereinrichtung 2) ermittelt den Eigenschaftsbedarf für die von ihm pro Jahr herzustellenden Fahrzeuge, z.B. 24 Monate im Voraus. Dieser Eigenschaftsbedarf wird in die Systemanbietereinrichtung 2 eingegeben und dort gespeichert. Gemäß einer anderen Ausgestaltung kann die Systemanbietereinrichtung 2 auch mit einer anderen Datenverarbeitungseinrichtung gekoppelt sein, welche den Eigenschaftsbedarf automatisch abschätzt bzw. ermittelt. Im Schritt S1 wird der Bedarf B für die Vielzahl von Eigenschaften E elektronisch an die Zentraleinrichtung 1 übermittelt, welche die Daten über die Schnittstelle 20 empfängt.

Auf Lieferantenseite wird die Kapazität K für die Kapazitätsfamilien des jeweiligen Lieferanten für den gleichen Zeitraum im Voraus ermittelt und in die Lieferanteneinrichtung 3 eingegeben. Diese Kapazitätsdaten könnten jedoch auch automatisch durch eine Kopplung der Lieferanteneinrichtung 3 mit einer Datenverarbeitungsanlage des jeweiligen Lieferanten, in der Informationen über alle Fertigungseinheiten des Lieferanten vorliegen, ermittelt werden. Im Schritt S2 wird die Kapazität K für die Kapazitätsfamilie(n) von der jeweiligen Lieferanteneinrichtung 3 an die Zentraleinrichtung 1 elektronisch übermittelt, welche diese Daten über die Schnittstelle 30 empfängt. Es wird bemerkt, dass die Schritte S1 und S2 auch in umgekehrter Reihenfolge oder gleichzeitig erfolgen können.

Im Schritt S3 werden die Eigenschaften, für welche ein Eigenschaftsbedarf B übermittelt worden ist, automatisch Teilegruppen zugeordnet. Diese Schritt erfolgt in einer Zuordnungseinheit 40, die in der Zentraleinrichtung 1 vorgesehen ist. Für die Zuordnung greift die Zuordnungseinheit 40 auf eine Datenbank zu, in der die Teile des Fahrzeugs den Kapazitätsfamilien der Lieferanten zugeordnet sind. Bei der Zuordnung ist es allerdings nicht erforderlich zu wissen, von welchen Teilen auf der Ebene der Teilenummern die Eigenschaften verwirklicht werden, vielmehr ist es ausreichen, zu wissen, welche Teilegruppen, die wiederum eine Vielzahl von Teilen umfassen, erforderlich sind, um die Eigenschaft zu verwirklichen, wobei die Teilegruppen unter Berücksichtigung der Kapazitätsfamilien der Lieferanten gebildet wurden.

Im Schritt S4 wird aus dem Eigenschaftsbedarf B ein Teilegruppenbedarf als Sekundärbedarf ermittelt. Da aus der Zuordnung der Eigenschaften zu den Teilegruppen bekannt ist, welche und wie viele Teilegruppen zur Verwirklichung der Eigenschaften erforderlich sind, besteht eine direkte Beziehung zwischen dem Eigenschaftsbedarf und dem Teilegruppenbedarf. Die Ermittlung des Teilegruppenbedarf wird auch in der Zuordnungseinheit 40 durchgeführt. Die Zuordnungseinheit 40 überträgt den Teilegruppenbedarf an eine Prüfeinheit 50.

Im Schritt S5 wird von der Prüfeinheit 50 schließlich für die Teilegruppen automatisch geprüft, ob der Teilegruppenbedarf größer als die Kapazität der Kapazitätsfamilie ist, die der jeweiligen Teilegruppe zugeordnet ist. Das Ergebnis dieser Prüfung wird der Systemanbietereinrichtung 2 und/oder der Lieferanteneinrichtung 3 verfügbar gemacht. Beispielsweise kann das Ergebnis der Prüfung über das Internet von der Systemanbietereinrichtung 2 und der Lieferanteneinrichtung 3 abgerufen werden oder per Datenfernübertragung an diese Einrichtungen 2, 3 übertragen werden.

Ferner kann an die Systemanbietereinrichtung 2 und/oder die Lieferanteneinrichtungen 3 von der Zentraleinrichtung 1 jeweils eine Mitteilung versandt werden, wenn der Bedarf B die Kapazität K für eine Kapazitätsfamilie übersteigt. Auf Lieferantenseite wird diese Mitteilung bevorzugt nur an die Lieferanteneinrichtungen 3 versandt, die Teile dieser Kapazitätsfamilie fertigen.

Es werden z.B. 5.000 Eigenschaften E1 (z.B. Klimageräte) pro Woche benötigt. Dieser Eigenschaftsbedarf ist zwei Jahre im Voraus bekannt. Die Zuordnung dieser Eigenschaften E1 zu Teilegruppen ergibt, dass für die Eigenschaft E1 5.000 Komponenten einer Teilegruppe pro Woche benötigt werden. Der Lieferant hat jedoch für die dieser Teilegruppe zugeordneten Kapazitätseinheit nur die Kapazität K für mit 3.000 Komponenten pro Woche angegeben. Der Vergleich des Bedarfs B und der Kapazität K für diese Kapazitätsfamilie KF ergibt somit, dass der Bedarf B größer als die Kapazität K ist, so dass für den betrachteten Zeitraum mit Lieferschwierigkeiten dieses Lieferanten zu rechnen ist. Es wird bemerkt, dass auf Seiten des Systemanbieters nicht bekannt sein muss, welche Teile T auf Teileebene (Teilenummernebene) benötigt werden, sondern nur unspezifisch der Eigenschaftsbedarf angegeben werden muss. Eine vollständige Zuordnung zu den Teilen des Systems, d.h. auf Teileebene, ist zu diesem Zeitpunkt noch nicht erforderlich. Gleichermaßen muss der Lieferant nicht ermitteln, wie die Kapazität K für jedes Einzelteil auf Teileebene ist, sondern er muss nur die unspezifischere Kapazität K für die Kapazitätsfamilie angeben. Solange eine Bedarfsänderung auf Teileebene diese Kapazität für die Kapazitätsfamilie nicht ändert, ist die Beschreibung über Kapazitätsfamilien ausreichend. Betrifft beispielsweise der Übergang von der Eigenschaftsebene zur Teileebene die Auswahl eines konkreten Materials und kann der Lieferant dieses Material kurzfristig bestellen, ist es nicht erforderlich, die konkrete Materialauswahl schon zum Zeitpunkt der Übermittlung des Eigenschaftsbedarfs B und der Kapazität K für die Kapazitätsfamilie anzugeben.

Im Folgenden werden Weiterbildungen und Ausgestaltungen des Ausführungsbeispiels erläutert. Sie können einzeln oder in Kombination das vorstehende Ausführungsbeispiel ergänzen oder, für sich genommen, neue Ausführungsbeispiele ergeben.

Gemäß einem weiteren Ausführungsbeispiel kann die von der Lieferanteneinrichtung 3 übermittelte Kapazität folgende Detaildaten enthalten, durch die mögliche zukünftige Probleme sehr früh erkannt werden können: eine verfügbare Kapazität, die der jeweilige Lieferant dem Fahrzeughersteller tatsächlich zur Verfügung stellt, die maximale Kapazität, die der jeweilige Lieferant unter Ausnutzung aller Maßnahmen für den Fahrzeughersteller zur Verfügung stellen kann und eine minimale Kapazität, welche der jeweilige Lieferant minimal für den Fahrzeughersteller bereitstellen kann. Unterschreitet z. B. der Bedarf dieser minimalen Kapazität für einen Zeitraum von 4 Wochen, kann der Lieferant ggf. seine verfügbare Kapazität senken.

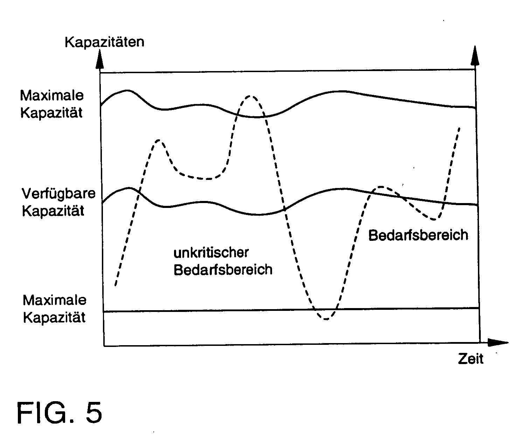

In Fig. 5 ist ein beispielhafter Bedarfsverlauf relativ zu den vorstehend erläuterten drei Kapazitätsdaten beschrieben. Zunächst befindet sich der Bedarf im unkritischen Bereich zwischen der minimalen Kapazität und der verfügbaren Kapazität. Der Bedarf wächst danach an und überschreitet die verfügbare Kapazität. Der Lieferant und der Fahrzeughersteller erkennen daher frühzeitig, dass der Lieferant dem Fahrzeughersteller zu diesem Zeitpunkt eine höhere Kapazität zur Verfügung stellen muss. Da dies in der Regel mit einer Vorlaufzeit verbunden ist, kann der Lieferant rechtzeitig entsprechende Maßnahmen ergreifen. Im weiteren Verlauf steigt der Bedarf bis über die maximale Kapazität des Lieferanten an. Der Fahrzeughersteller kann somit frühzeitig erkennen, dass er möglicherweise kurzfristig einen weiteren Lieferanten für die jeweilige Kapazitätsfamilie hinzunehmen muss, wenn dieser Engpass nicht anders gelöst werden kann. Im weiteren Verlauf fällt der Bedarf wieder ab, bis er schließlich die minimale Kapazität unterschreitet. Der Lieferant kann somit frühzeitig entscheiden, ob er die für den Fahrzeughersteller verfügbare Kapazität absenkt.

In der Prüfeinheit 50 wird der Bedarf mit den Detaildaten zur Kapazität verglichen. Drei Ergebnisse können dabei auftreten:
1. Bedarfsunterdeckung I: Der Bedarf ist höher als die verfügbare Kapazität, könnte aber durch Einsatz der maximalen Kapazität abgedeckt werden. Tritt dieses Ergebnis ein, kann über die Prüfeinheit 50 den Einrichtungen des Fahrzeugherstellers und/oder des Lieferanten entsprechende Mitteilungen übertragen werden. Beispielsweise kann sich auf dem Bildschirm der jeweiligen Datenverarbeitungsanlagen ein betroffenes Feld orange färben.
2. Bedarfsunterdeckung II: Der Bedarf ist höher als die verfügbare Kapazität und kann auch durch Einsatz der maximalen Kapazität nicht abgedeckt werden. Auch in diesem Fall wird eine entsprechende Mitteilung an die Einrichtungen des Fahrzeugherstellers und/oder des betroffenen Lieferanten übertragen. Hier kann sich beispielsweise das betroffene Feld rot einfärben.
3. Kapazitätsüberschuss: Der Bedarf ist geringer als die minimale Kapazität, d.h. der Lieferant hat Kapazitäten, denen kein ausreichender Bedarf gegenübersteht. Auch in diesem Fall werden Mitteilungen an die Einrichtungen des Fahrzeugherstellers und/oder des jeweiligen Lieferanten übertragen, wobei sich hier ein betroffenes Feld gelb einfärbt.

Im Fall der Bedarfsunterdeckung I oder II können sich folgende Verfahrensschritte automatisch anschließen: Die übertragenen Kapazitätsdaten werden automatisch auf Fehler und Falscheingaben überprüft. Wenn nötig, können die Daten automatisch von der Zentraleinrichtung 1 korrigiert werden. Ferner kann die Zentraleinrichtung 1 automatisch Daten von Datenverarbeitungsanlagen der Fertigung anfordern und auf mögliche Probleme in der Fertigung überprüfen. Daran anschließend kann automatisch geprüft werden, ob es möglich ist die Probleme bis zum kritischen Zeitpunkt zu beheben. Außerdem kann die Zentraleinrichtung 1 automatisch die Kapazitätsdaten der Vorlieferanten und mögliche Engpässe dort überprüfen. Daran anschließend kann die Zentraleinrichtung 1 automatisch einen Wechsel zu alternativen Vorlieferanten vorschlagen. Schließlich kann die Entwicklung der Bedarfsdaten überprüft werden, insbesondere ob der Bedarf höher als erwartet ist.

Gemäß einem weiteren Ausführungsbeispiel kann die Systemanbietereinrichtung 2, d.h. die Datenverarbeitungsanlage des Fahrzeugherstellers, zusätzlich zu dem Eigenschaftsbedarf zu einem späteren Zeitpunkt den Teilebedarf (auf Teilenummernebene) an die Zentraleinrichtung 1 übermitteln. Beispielsweise kann der Eigenschaftsbedarf 104 Wochen im Voraus übermittelt werden und der Teilebedarf 16 Wochen im Voraus. Ferner übermitteln in diesem Fall die Lieferanteneinrichtungen 3 die Kapazität für die Kapazitätsfamilie an die Zentraleinrichtung 1. Ab diesem Zeitpunkt kann dann geprüft werden, ob der Teilebedarf größer als die Kapazität ist, und das Ergebnis dieser Prüfung der Systemanbietereinrichtung 2 und/oder den Lieferanteneinrichtungen 3 verfügbar gemacht werden. Z.B. können Mitteilungen an die Lieferanteneinrichtungen 3 sowie die Systemanbietereinrichtung gesandt werden, falls die Teilekapazität um einen bestimmten Wert kleiner als der Teilebedarf ist.

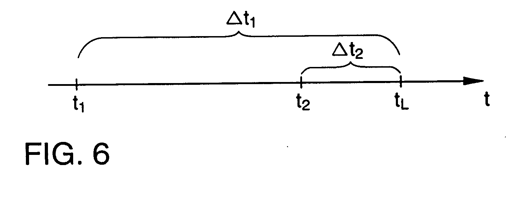

Der übermittelte Eigenschaftsbedarf und der übermittelte Teilebedarf können verschiedene Zeiträume betreffen. Dies ist in Fig. 6 dargestellt. t_{L} bezeichnet in dieser Darstellung den Lieferzeitpunkt. Der Eigenschaftsbedarf wird zu einem Zeitpunkt t₁ für den Zeitraum Δt₁ von z.B. 104 Wochen mitgeteilt. Dieser Zeitraum Δt₁ endet beim Liefertermin t_{L}. Der Teilebedarf wird zu einem zweiten späteren Zeitpunkt t₂ für den Zeitraum Δt₂ mitgeteilt. Dieser Zeitraum ist wesentlich kürzer als der Zeitraum Δt₁. Auch er endet zum Lieferzeitpunkt t_{L}. Wie in Fig. 6 dargestellt, umfasst der erste Zeitraum Δt₁ Zeitabschnitte, die zeitlich vor dem zweiten Zeitraum Δt₂ liegen.

Auf Grund der Tatsache, dass die Teilegruppen für den Zeitraum Δt₁, d.h. z.B. von der 17. bis zur 104. Woche, den selben Kapazitätsfamilien zugeordnet sind wie die konkreten Teile T für den Zeitraum Δt₂, z.B. von der fünften bis zur 16. Woche, werden die Kapazitäten der Kapazitätsfamilie von der 17. Woche korrekt in die 16. Woche übernommen und die richtigen Teile und deren Bedarfe automatisch zugeordnet.

Bei der Ermittlung der Kapazitäten durch die Lieferanten werden nur die Fertigungseinheiten der Kapazitätsfamilien betrachtet und nicht die Lagerbestände des Lieferanten. Für die langen Zeiträume, die auf der Eigenschaftsebene betrachtet werden, können die derzeitigen Bestände für den Bedarfs-Kapazitätsvergleich vernachlässigt werden, da sie ein Durchlaufposten darstellen.

Gemäß einer Weiterbildung des Ausführungsbeispiels wird nicht nur geprüft, ob der Eigenschaftsbedarf größer als die Kapazitäten für die zugeordneten Kapazitätsfamilien ist, sondern auch ob und ggf. um wie viel der Eigenschaftsbedarf die jeweiligen Kapazitäten unterschreitet. Auch das Ergebnis dieser Prüfung kann der Systemanbietereinrichtung 2 und/oder der Lieferanteneinrichtung 3 verfügbar gemacht werden.

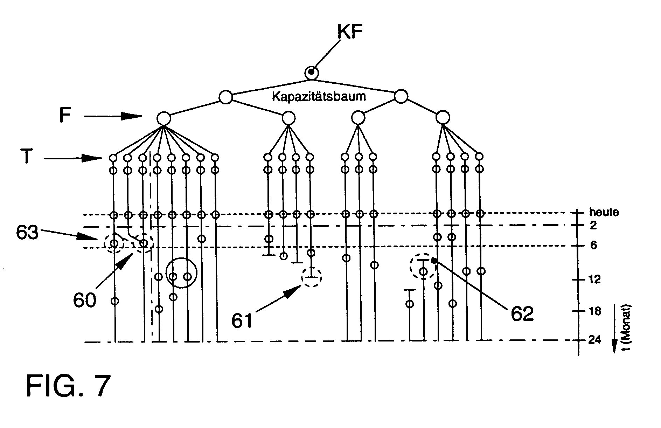

Anhand von Fig. 7 wird erläutert, wie sich eine Kapazitätsfamilie KF in einem Bedarfs-Kapazitäts-Baum aufspaltet. Die Kapazitätsfamilie KF umfasst in dem in Fig. 7 gezeigten Beispiel vier Fertigungseinheiten F, welche die Teile T fertigen. Auf Teileebene besteht nun das Problem, dass eine Vorausschau über einen Zeitraum von z.B. 24 Monaten nicht möglich ist. Zwar ist für einige Teile bekannt, dass diese mit großer Wahrscheinlichkeit auf lange Zeit in Fahrzeugen verbaut werden. Für viele Teile ergeben sich jedoch Veränderungen.

Es kann sich beispielsweise ergeben, dass zwei derzeit verwendete Teile zu einem neuen Teil zusammengefasst werden. Diese Situation ist in Fig. 7 mit 60 bezeichnet. Ferner kann es passieren, dass bestimmte Teile auslaufen und nicht mehr benötigt werden. Diese Situation ist mit 61 bezeichnet. Des Weiteren können neue Teile entwickelt werden, welche dann von den entsprechenden Fertigungseinheiten hergestellt werden müssen. Diese Situation ist mit 62 bezeichnet. Schließlich können sich Teile verändern, wobei sie weiterhin von der gleichen Fertigungseinheit F hergestellt werden. Diese Situation ist mit 63 bezeichnet. Derartige Entwicklungen können nicht vorausgesagt werden, es ist jedoch wahrscheinlich, dass die beschriebenen Veränderungen die Kapazität einer Fertigungseinheit F nicht wesentlich beeinflussen. Ist die Fertigungseinheit F z.B. eine Druckgussmaschine für Aluminiumfelgen, kann angegeben werden, wie viele Felgen pro Tag von dieser Maschine hergestellt werden können. Selbst wenn sich nach sechs Monaten herausstellt, dass ein neues Felgendesign gefertigt werden soll, ändert dies an der Kapazität der Maschine nichts. Dieses Beispiel zeigt den großen Vorteil der Beschreibung der Kapazität über Kapazitätsfamilien KF. Nur so kann eine Kapazität für einen langen Zeitraum angegeben werden. Die Kapazität auf Teileebene kann für einen längeren Zeitraum nicht angegeben werden, da unbekannt ist, welche Teile tatsächlich in Zukunft gefertigt werden müssen.

## Patentansprüche

1. Verfahren zum Ermitteln und/oder Überwachen von Ressourcen in einem Herstellungsprozess, bei dem zumindest ein Lieferant Teile (T) an zumindest einen Systemanbieter (SA) liefert, welcher ein diese Teile (T) umfassendes System herstellt, wobei zumindest eine Systemanbietereinrichtung (2) und zumindest eine Lieferanteneinrichtung (3) über Kommunikationsverbindungen (4) mit einer Zentraleinrichtung (1) verbunden sind,
**dadurch gekennzeichnet,**
- **dass** ein Eigenschaftsbedarf des Systems als Primärbedarf ermittelt wird und die Systemanbietereinrichtung den Eigenschaftsbedarf an die Zentraleinrichtung (1) elektronisch übermittelt,
- **dass** die Lieferanteneinrichtung (3) die Kapazität für zumindest eine Kapazitätsfamilie (KF) an die Zentraleinrichtung (1) elektronisch übermittelt, wobei eine Kapazitätsfamilie eine Menge von Teilen umfasst, die auf einer Kapazitätseinheit des Lieferanten fertigbar ist,
- **dass** den Eigenschaften automatisch Teilegruppen zugeordnet werden, wobei eine Teilegruppe die Menge von zur Erzeugung einer Eigenschaft erforderlichen Teilen ist, die auf einer Kapazitätsfamilie fertigbar sind,
- **dass** aus dem Eigenschaftsbedarf ein Teilegruppenbedarf als Sekundärbedarf ermittelt wird,
- **dass** für die Teilegruppen automatisch geprüft wird, ob der Teilegruppenbedarf größer als die Kapazität der Kapazitätsfamilie ist, die der jeweiligen Teilegruppe zugeordnet ist, und das Ergebnis dieser Prüfung der Systemanbietereinrichtung und/oder der Lieferanteneinrichtung verfügbar gemacht wird.

2. Verfahren nach Anspruch 1, **dadurch gekennzeichnet, dass** beim Zuordnen der Eigenschaften zu den Teilegruppen auf eine Datenbank zugegriffen wird, in der die Teile (T) des Systems den Kapazitätsfamilien der Lieferanten zugeordnet sind.

3. Verfahren nach Anspruch 1 oder 2, **dadurch gekennzeichnet,**
- **dass** die von der Lieferanteneinrichtung (3) übermittelte Kapazität folgende Daten umfasst: eine verfügbare Kapazität, eine maximal bereitstellbare Kapazität und/oder eine minimale Kapazität und
- **dass** automatisch geprüft wird, ob der Teilegruppenbedarf die verfügbare Kapazität und/oder die maximale Kapazität überschreitet und/oder die minimale Kapazität unterschreitet und das Ergebnis dieser Prüfung der Systemanbietereinrichtung (2) und/oder der Lieferanteneinrichtung (3) verfügbar gemacht wird.

4. Verfahren nach einem der vorstehenden Ansprüche, **dadurch gekennzeichnet,**
- **dass** die Systemanbietereinrichtung (2) für ein System den Eigenschaftsbedarf ab einem ersten Zeitpunkt (t₁) an die Zentraleinrichtung (1) übermittelt und
- **dass** die Systemanbietereinrichtung (2) den Teilebedarf für dieses System ab einem zweiten, späteren Zeitpunkt (t₂) an die Zentraleinrichtung (1) übermittelt,
- **dass** die Lieferanteneinrichtung (3) die Kapazität für die Teile (T) ab dem zweiten Zeitpunkt (t₂) an die Zentraleinrichtung übermittelt und
- **dass** automatisch geprüft wird, ob der Teilebedarf größer als die Teilekapazität ist, und das Ergebnis dieser Prüfung der Systemanbietereinrichtung (2) und/oder der Lieferanteneinrichtung (3) verfügbar gemacht wird.

5. Verfahren nach Anspruch 4, **dadurch gekennzeichnet,**
**dass** der Eigenschaftsbedarf einen ersten Zeitraum (Δt₁) und der Teilebedarf einen zweiten Zeitraum (Δt₂) betrifft, wobei der erste Zeitraum (Δt₁) Zeitabschnitte umfasst, die zeitlich vor dem zweiten Zeitraum (Δt₂) liegen.

6. Verfahren nach einem der vorstehenden Ansprüche, **dadurch gekennzeichnet, dass** eine Kapazitätsfamilie (KF) mehrere Fertigungseinheiten eines Lieferanten zur Herstellung eines oder mehrerer Teile (T) umfasst.

7. Verfahren nach einem der vorstehenden Ansprüche, dass bei den Kapazitätsdaten Bestände der Lieferanten unberücksichtigt bleiben.

8. Verfahren nach einem der vorstehenden Ansprüche, dass für die Kapazitätsfamilie(n) (KF) geprüft wird, ob und um wie viel der Teilegruppenbedarf die Kapazität unterschreitet und das Ergebnis dieser Prüfung der Systemanbietereinrichtung (2) und/oder der Lieferanteneinrichtung (3) verfügbar gemacht wird.

9. Vorrichtung zum Ermitteln und/oder Überwachen von Ressourcen in einem Herstellungsprozess, bei dem zumindest ein Lieferant Teile (T) an zumindest einen Systemanbieter (SA) liefert, welcher ein diese Teile (T) umfassendes System herstellt, mit einer Zentraleinrichtung (1), die über Kommunikationsverbindungen (4) mit zumindest einer Systemanbietereinrichtung (2) und zumindest einer Lieferanteneinrichtung (3) koppelbar ist,
**dadurch gekennzeichnet, dass** die Zentraleinrichtung (1) umfasst:
- eine erste Schnittstelle (20) zum elektronischen Empfang des Eigenschaftsbedarfs von der Systemanbietereinrichtung (2),
- eine zweite Schnittstelle (30) zum elektronischen Empfang der Kapazität für zumindest eine Kapazitätsfamilie (KF) von der oder den Lieferanteneinrichtung(en) (3), wobei eine Kapazitätsfamilie (KF) die Menge von Teilen (T) umfasst, die auf einer Kapazitätseinheit des Lieferanten fertigbar ist,
- eine Zuordnungseinheit (40), mittels derer automatisch den Eigenschaften Teilegruppen zugeordnet werden können, wobei eine Teilegruppe die Menge von zur Erzeugung der Eigenschaft erforderlichen Teilen ist, die auf einer Kapazitätsfamilie fertigbar sind, und durch die aus dem Eigenschaftsbedarf ein Teilegruppenbedarf ermittelbar ist, und
- eine Prüfeinheit (50), die prüft, ob für die Teilegruppen der Teilegruppenbedarf größer als die Kapazität der Kapazitätsfamilie ist, die der jeweiligen Teilegruppe zugeordnet ist, wobei das Ergebnis dieser Prüfung der Systemanbietereinrichtung (2) und/oder der Lieferanteneinrichtung (3) verfügbar gemacht werden kann.

10. Vorrichtung gemäß Anspruch 9, **dadurch gekennzeichnet, dass** die Zentraleinrichtung mit einem Speicher verbunden ist, in dem eine Datenbank gespeichert ist, in der die Teile des Systems den Kapazitätsfamilien der Lieferanten zugeordnet sind.

11. Vorrichtung gemäß Anspruch 9 oder 10, **dadurch gekennzeichnet,**
- **dass** über die zweite Schnittstelle (30) zu der von der Lieferanteneinrichtung (3) übermittelten Kapazität folgende Daten elektronisch empfangbar sind: eine verfügbare Kapazität, eine maximal bereitstellbare Kapazität und/oder eine minimale Kapazität, und
- **dass** die Prüfeinheit (50) prüft, ob der Teilegruppenbedarf die verfügbare Kapazität und/oder die maximale Kapazität überschreitet und/oder die minimale Kapazität unterschreitet und das Ergebnis dieser Prüfung der Systemanbietereinrichtung (2) und/oder der Lieferanteneinrichtung (3) verfügbar gemacht werden kann.

12. Vorrichtung nach einem der Ansprüche 9 bis 11, **dadurch gekennzeichnet, dass** die Systemanbietereinrichtung(en) (2) und die Lieferanteneinrichtung(en) (3) über das Internet und/oder ein Intranet miteinander gekoppelt sind und der Eigenschaftsbedarf sowie die Kapazität über das Internet und/oder ein Intranet elektronisch übermittelbar sind.

13. Vorrichtung nach einem der Ansprüche 9 bis 12, dass die Prüfeinheit (50) ferner für die Teilegruppen prüft, ob und um wie viel der Teilegruppenbedarf die Kapazität unterschreitet und das Ergebnis dieser Prüfung der Systemanbietereinrichtung (2) und/oder der Lieferanteneinrichtung (3) verfügbar gemacht werden kann.

14. Computersystem, programmtechnisch eingerichtet zur Durchführung des Verfahrens nach einem der Ansprüche 1 bis 8.

15. Computerprogramm mit Programmcode-Mitteln, um alle Schritte von jedem beliebigen der Ansprüche 1 bis 8 durchzuführen, wenn das Programm auf einem Computersystem ausgeführt wird.

16. Computerprogrammprodukt mit Programmcode-Mitteln, die auf einem computerlesbaren Datenträger gespeichert sind, um das Verfahren nach jedem beliebigen der Ansprüche 1 bis 8 durchzuführen, wenn das Programmprodukt auf einem Computer ausgeführt wird.
